# EUROPÄISCHE PATENTSCHRIFT

(11) **EP 2 818 438 B1**
(45) Veröffentlichungstag und Bekanntmachung des Hinweises auf die Patenterteilung: **23.12.2015**
(21) Anmeldenummer: 14161681.3
(22) Anmeldetag: 26.03.2014
(51) Int. Cl.: B65G 57/03, B65G 57/04

(54) **Stapelvorrichtung sowie Stapelverfahren**
Stacking device and stacking method
Dispositif et procédé d'empilement

(30) Priorität: 24.06.2013 DE 102013106553
(43) Veröffentlichungstag der Anmeldung: 31.12.2014
(73) Patentinhaber: Waldorf Technik GmbH & Co. KG, 78234 Engen (DE)
(72) Erfinder: Czizegg, Wolfgang, 78256 Steisslingen (DE); Fuhrmann, Ralf, 78234 Engen (DE)
(74) Vertreter: Wagner, Kilian

(56) Entgegenhaltungen:
- FR-A1- 2 512 425

## Beschreibung

Die Erfindung betrifft eine Stapelvorrichtung gemäß dem Oberbegriff des Anspruchs 1 zum gleichzeitigen Erzeugen mehrerer Teilestapel, umfassend mindestens zwei entlang einer Stellachse verstellbare Stapeleinheiten, auf die in einer gemeinsamen Ablageebene zur Bildung jeweils eines Teilestapels Teile ablegbar sind. Ferner betrifft die Erfindung ein Stapelverfahren zum gleichzeitigen Erzeugen mehrerer Teilestapel, vorzugsweise von Spritzgussteilestapeln oder Tiefziehteilestapeln gemäß Anspruch 12. Darüber hinaus betrifft die Erfindung ein System gemäß Anspruch 14 mit einer Teileproduktionsvorrichtung und einer nach der Erfindung ausgebildeten Stapelvorrichtung.

Stapelvorrichtungen zum gleichzeitigen Erzeugen mehrerer Teilestapel sind üblicherweise Spritzgussvorrichten nachgeordnet, um gleichzeitig die Teile aus unterschiedlichen Kavitäten eines Schusses nebeneinander in die Höhe stapeln zu können. Das Ablegen der Teile auf den Teilestapeln erfolgt gleichzeitig, in der Regel mittels eines Vakuum- oder sonstigen Greifers, wobei der Vakuumgreifer die Teile in einer gemeinsamen Ablageebene ablegt. Um zu gewährleisten, dass das Ablegen der Teile in einer gemeinsamen Ablageebene möglich ist, können Stapeleinheiten, auf denen jeweils ein Stapel gebildet wird individuell unabhängig voneinander mittels jeweils eines servomotorischen Antriebs in der Höhe verstellt werden, so dass sich die obersten Teile der Stapel in einer gemeinsamen Ebene befinden. Das individuelle Stellen der Teilestapel entlang der Verstellachse ist notwendig, da es aufgrund einer zwischengeschalteten Qualitätssicherungsmaßnahme und einer daraus resultierenden Aussortierung von Teilen oder aufgrund von Störungen vorkommen kann, dass bei einem gemeinsamen Ablagevorgang auf mehrere Teilestapel auf einen oder mehrere Teilestapel keine Teile abgelegt werden. Diese Teilestapel müssen dann in Ihrer Position verharren, während diejenigen Teilestapel, die um ein Teil erweitert wurden, um ein Rastermaß, welches der Erstreckung eines Teils in Richtung der Verstellachse entspricht, aus der Ablageebene nach unten bewegt werden. Derartige Stapelvorrichtungen haben sich bewährt, sind jedoch kostenintensiv, da eine Vielzahl von servomotorischen Antrieben benötigt wird.

Aus der FR 2 512 425 A1 ist es bekannt gleichzeitig mehrere Teile auf unterschiedliche Teilestapel in einer gemeinsamen Ablageebene abzulegen und diejenigen Teilestapel, auf denen ein Teil abgelegt wurde entlang einer Verstellachse zu verstellen. Die bekannte , dem Oberbegriff des Anspruchs 1 entsprechende Vorrichtung bedient sich dabei eines Spindeltriebs, welcher ein nur vergleichsweise langsames Verstellen ermöglicht - insbesondere ein Rückverstellen der Stapeleinheiten nach Entnehmen des Teilestapels geht nur sehr langsam vonstatten.

Ausgehend von dem vorgenannten Stand der Technik liegt der Erfindung die Aufgabe zugrunde, eine alternative Stapelvorrichtung anzugeben, die mit weniger Antrieben zum Verstellen der Stapeleinheiten entlang der Verstellachse auskommt. Ferner besteht die Aufgabe darin, ein Stapelverfahren anzugeben, welches ein gleichzeitiges Erzeugen von Teilestapeln mit möglichst wenigen Antrieben erlaubt.

Diese Aufgabe wird durch eine Vorrichtung mit den Merkmalen des Anspruchs gelöst. Vorteilhafte Weiterbildungen der Erfindung sind in den Unteransprüchen angegeben.

Der Erfindung liegt der Gedanke zugrunde, gemeinsame Verstellmittel zum Verstellen der Stapeleinheiten und damit der Teilestapel entlang der Verstellachse vorzusehen, wobei hierzu gemäß der Erfindung vorgesehen ist, die Teilestapel bzw. die Stapeleinheiten mit diesen Verstellmitteln koppeln und wieder entkoppeln zu können, wobei die Verstellmitteleine regelmäßige Hin- und Her-, vorzugsweise Auf- und Abbewegung entlang der Verstellachse ausführen und nur diejenigen Stapeleinheiten bzw. Teilestapel mit den Verstellmitteln gekoppelt werden, auf die bei einem gemeinsamen Ablagevorgang ein Teil abgelegt wurde, um die entsprechenden Stapel um ein Rastermaß, welches bevorzugt der Höhenerstreckung eines Teils entlang der Verstellachse entspricht, aus der Ablageebene verstellen zu können, um somit zu gewährleisten, dass die gemeinsame Ablageebene erhalten bleibt. Diejenigen Stapeleinheiten bzw. Teilestapel, auf die während des gemeinsamen Ablagevorgangs, beispielsweise aufgrund eines Aussortierens einer zwischengeschalteten Qualitätssicherungsmaßnahme oder aufgrund einer Störung kein Teil abgelegt wird, werden nicht mit den Verstellmitteln gekoppelt, sondern verharren in ihrer Position entlang der Verstellachse, bis bei einem nächsten Ablagevorgang ein Teil auf diese abgelegt wird.

Erfingdungsgemäß ist den Stapeleinheiten der Stapelvorrichtung mindestens ein sich entlang der Verstellachse erstreckendes Rasterelement sowie mindestens ein sich entlang der Verstellachse erstreckendes Halteelement zugeordnet. Bevorzugt ist das mindestens eine Rastelement und/oder das mindestens eine Halteelement langgestreckt, bevorzugt säulenförmig ausgestaltet. Dem mindestens einen Rasterelement sind nun die Verstellmittel zugeordnet, mit denen das mindestens eine Rasterelement entlang der Verstellachse relativ zu dem mindestens einen Halteelement hin und her bewegbar ist und zwar um ein Rastermaß, welches, wie später noch erläutert werden wird, bevorzugt einstellbar ist, um die Stapelvorrichtung einfach auf unterschiedliche Teile anpassen zu können. Bevorzugt ist das Rastermaß dabei stufenlos einstellbar. Um nun eine Kopplung (Wirkverbindung) der Stapeleinheiten mit den (gemeinsamen) Verstellmitteln zu ermöglichen, sind jeder Stapeleinheit Rastelementarretiermittel zugeordnet, mit denen die jeweilige Stapeleinheit lösbar an dem zugeordneten Rasterelement festlegbar ist, mit dem Ziel, die Stapeleinheit gemeinsam mit dem Rasterelement bei seiner Hin- und Herbewegung um ein Rastermaß von der Ablageebene weg zu verstellen, wobei im Idealfall, d.h. für den Fall, dass auf alle Stapeleinheiten bei einer gemeinsamen Ablagevorrichtung ein Teil abgelegt wurde, sämtliche Stapeleinheiten gleichzeitig mit dem mindestens einen Rasterelement gekoppelt werden.

Für den Fall, dass auf eine der Stapeleinheiten bei einem gemeinsamen Ablagevorgang jedoch kein Teil abgelegt wird, sind jeder Rastereinheit neben den Rasterelementarretiermitteln Halteelementarretiermittel zugeordnet, mit denen die jeweilige Stapeleinheit zum Halten ihrer Position entlang der Vertellachse mit dem mindestens einen, vorzugsweise stationär angeordneten Halteelement koppelbar ist, so dass die restlichen, mit dem mindestens einen Rasterelement gekoppelten Stapeleinheiten relativ zu der noch an dem Halteelement gehalten Stapeleinheit um ein Rastermaß verstellt werden können. Nach der Verstellbewegung befinden sich die oberen Ende der Teilestapel in einer gemeinsamen Ebene, so dass eine gemeinsame Ablageebene bereitgestellt wird. Aufgrund der erfindungsgemäßen Stapelvorrichtung sind zum Hin- und Herverstellen des mindestens einen Rasterelements und damit der Mehrzahl von Stapeleinheiten gemeinsame Verstellmittel vorgesehen - auf individuelle Verstellmittel (Antriebe) kann verzichtet werden - diese werden quasi ersetzt durch die Halteelementarretiermittel und Rasterelementarretiermittel, mit denen eine Kopplung und Endkopplung der Stapeleinheiten über mindestens eine Rasterelement mit den gemeinsamen Verstellmitteln möglich ist.

Wie erwähnt ist es grundsätzlich möglich, dass sich mehrere Stapeleinheiten eines gemeinsamen Rasterelementes und/oder eines gemeinsamen Halteelementes bedienen, wobei zu diesem Zweck die Stapeleinheiten bzw. die Arretiermittel unterschiedlicher Stapeleinheiten vorzugsweise an unterschiedlichen Positionen entlang der Verstellachse an dem gemeinsamen Rasterelement bzw. dem gemeinsamen Halteelement angreifen. Konstruktiv bevorzugter ist eine Variante der Stapelvorrichtung, bei der jeder Stapeleinheit oder jeder Gruppe von Stapeleinheiten ein sich entlang der Verstellachse erstreckendes Rasterelement und/oder ein sich entlang der Verstellachse erstreckendes Halteelement zugeordnet ist, und dass die Rasterelemente gemeinsam mit Hilfe der gemeinsamen Verstellmittel um das Rastermaß entlang der Verstellachse relativ zu den Haltemitteln hin- und herbewegbar sind.

Im Hinblick auf die Ausbildung der Rasterelementarretiermittel und/oder der Halteelementarretiermittel gibt es unterschiedliche Möglichkeiten. So können diese beispielsweise ausschließlich reibschlüssig oder ausschließlich in axialer Richtung formschlüssig oder kombiniert reibschlüssig und in axialer Richtung formschlüssig mit dem Rasterelement bzw. dem Halteelement zusammenwirkend ausgebildet sein. Im Falle der Realisierung einer in axialer Richtung formschlüssigen Zusammenwirkung ist es bevorzugt, wenn das Rasterelement bzw. das Halteelement eine entsprechende Formschlussgeometrie, insbesondere regelmäßig beabstandete Vertiefungen oder Erhöhungen am Umfang aufweist. Ganz besonders bevorzugt ist es jedoch, wenn die Rasterelementarretiermittel und/oder die Halteelementarretiermittel ausschließlich reibschlüssig durch Klemmen des mindestens einen Rasterelementes bzw. Halteelements mit diesem Zusammenwirken. In diesem Fall kann das mindestens eine Rasterelement bzw. Halteelement am Außenumfang glatt ausgebildet werden, was insbesondere vorteilhaft ist für eine bevorzugte stufenlose Einstellbarkeit des Rastermaßes.

Um eine klemmende Wechselwirkung zwischen den Rasterelementarretiermitteln und dem mindestens einen Rasterelement und/oder den Halteelementarretiermitteln und dem mindestens einen Halteelement zu ermöglichen, ist es bevorzugt, wenn die entsprechenden Arretiermittel eine, bevorzugt pneumatisch betätigbare, Klemmpatrone zur Wechselwirkung mit dem entsprechenden Element umfassen.

Im Hinblick auf die konkrete Ausbildung der gemeinsamen Verstellmittel der Stapeleinheiten, mit welchen das mindestens eine Rasterelement, bevorzugt die mehreren Rasterelemente hin- und herverstellbar sind, gibt es unterschiedliche Möglichkeiten. So ist es denkbar, dass diese Verstellmittel einen pneumatischen, hydraulischen oder elektrischen, beispielsweise servomotorischen Antrieb umfassen.

Damit die Stapeleinheiten nach vollständiger Auffüllung eines Stapels und damit maximaler Beabstandung von der gemeinsamen Ablageebene wieder in eine Ausgangsposition, insbesondere benachbart zu der gemeinsamen Ablageebene verstellbar sind, sind den Stapeleinheiten zu deren individueller Zurückverstellung Rückstellmittel zugeordnet, wobei es auch hier im Hinblick auf die konkrete Ausgestaltung unterschiedliche Möglichkeiten gibt, besonders bevorzugt ist es einen pneumatischen Antrieb, insbesondere einen Kolben-Zylinderantrieb hierfür vorzusehen. Als besonders vorteilhaft hat es sich erwiesen, wenn dem mindestens einen Halteelement nicht nur die Funktion zum Positionshalten einer Stapeleinheit zukommt, sondern wenn das mindestens eine Halteelement gleichzeitig zur Führung der zugeordneten Stapeleinheit bei deren Verstellbewegung entlang der Verstellachse dient.

Die Stapelvorrichtung umfasst bevorzugt Steuermittel zum gezielten Ansteuern der Rasterelementarretiermittel und der Halteelementarretiermittel, wobei es besonders bevorzugt ist, wenn die Steuermittel derart ausgebildet sind, dass eine gleichzeitige Arretierung der Rasterelementarretiermittel und der Haltearretiermittel bei hin- und herbewegtem Rasterelement blockiert wird, um eine Störung bzw. Beschädigung der Stapelvorrichtung zu vermeiden.

Besonders zweckmäßig ist es, wenn die Stapelvorrichtung Ablagemittel aufweist, beispielsweise in der Form eines Greifers, beispielsweise eines Vakuumgreifers, mit denen gleichzeitig eine Mehrzahl von Teile in der Ablageebene auf die Stapeleinheiten ablegbar sind, wobei hierzu die Ablagemittel mehrere Aufnahmeplätze für Teile umfassen, wobei bevorzugt die Anzahl der Aufnahmeplätze der Anzahl der Stapeleinheiten entspricht.

Um korrekte Ansteuerung der Rasterelementarretiermittel und der Halteelementarretiermittel durch die diesen zugeordneten Steuermittel zu ermöglichen, ist in Weiterbildung der Erfindung vorgesehen, dass signalleitend mit den Steuermitteln verbundene Detektionsmittel vorgesehen sind, mit denen erkennbar ist, ob bei einem Ablagevorgang zumindest eines der Teile fehlt oder fehlen wird. Die Detektionsmittel können dabei beispielsweise Teil einer fakultativen Qualitätssicherungseinrichtung sein, mit der Teile aussortiert werden oder die Detektionsmittel sind beispielsweise unmittelbar dem fakultativ vorgesehenen Ablagemitteln zugeordnet und überwachen diese, beispielsweise optisch oder mit einer sonstigen Sensorik. Auch ist es denkbar, dass die Detektionsmittel unmittelbar den Teilestapeln zugeordnet sind und überprüfen, ob ein Teil abgelegt wurde oder nicht. Bevorzugt erfolgt die Ansteuerung der Rasteelementarretiermittel und der Halteelementarretiermittel auf Basis der Information der Detektionsmittel derart, dass dann, wenn die Detektionsmittel feststellen, dass ein Teil auf einer der Stapeleinheiten nicht abgelegt worden ist oder abgelegt werden wird keine Kopplung der Stapeleinheit mit dem mindestens einen Halteelement erfolgt und dass, für den Fall, dass ein Teil abgelegt wurde für die nächste Abwärtsbewegung eine Kopplung bzw. Arretierung erfolgt, bei gleichzeitigem Loslassen der Halteelementarretiermittel, um so den um ein Teil ergänzten Teilestapel um ein Rastermaß von der Ablageebene wegbewegen zu können.

Wie eingangs erwähnt betrifft die Erfindung auch ein Stapelverfahren gemäß Anspruch 12, welches mit einer nach der Erfindung ausgebildeten Stapelvorrichtung ausgeführt wird. Bevorzugt sind Spritzgussteile oder Tiefziehteile Teil dieses Verfahrens.

Die Erfindung führt auch auf ein System gemäß Anspruch 14, umfassend eine Teileproduktionsvorrichtung, insbesondere eine Spritzgieß- oder Tiefzieheinrichtung, zum gleichzeitigen produzieren mehrerer Teile und eine nach der Erfindung ausgebildeten Stapelvorrichtung zum gleichzeitigen Bilden von Teilestapeln durch Ablegen mehrerer der Teile in einer gemeinsamen Ablageebene.

Weitere Vorteile, Merkmale und Einzelheiten der Erfindung ergeben sich aus der nachfolgenden Beschreibung bevorzugter Ausführungsbeispiele sowie anhand der Zeichnungen.

Diese zeigen in:
- Fig. 1 bis Fig. 3: unterschiedliche Ansichten einer Stapelvorrichtung mit in dem Ausführungsbeispiel vier Stapeleinheiten, und
- Fig. 4 bis Fig. 8: unterschiedliche Ansichten einer Stapeleinheit der Stapelvorrichtung gemäß den Fig. 1 bis 3 mit zugehörigem Rasterelement, Halteelement sowie Rasterelementarretiermitteln und Halteelementarretiermitteln.

In den Figuren sind gleiche Elemente und Elemente mit der gleichen Funktion mit den gleichen Bezugszeichen gekennzeichnet.

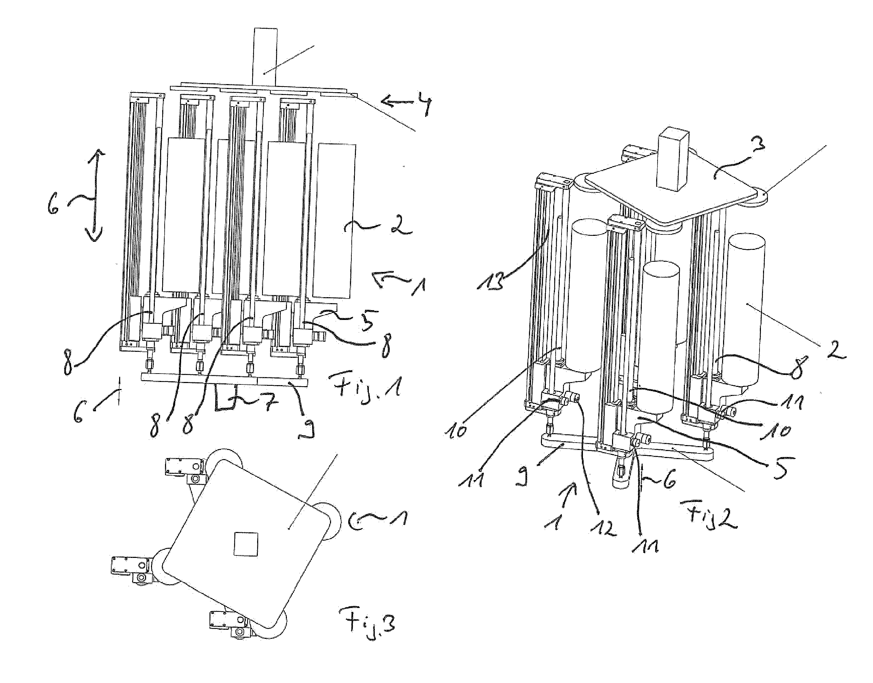

In den Fig.1 bis 3 ist beispielhaft eine Stapelvorrichtung 1 zur gleichzeitigen Ausbildung von, in dem Beispiel vier, Teilestapeln 2 gezeigt. Die Stapelvorrichtung 1 umfasst Ablagemittel 3 in Form eines Vakuumgreifers mit welchem gleichzeitig in einer gemeinsamen Ablageebene 4 in dem Ausführungsbeispiel beispielhaft vier Teile auf die vier Teilestapel 2 ablegbar sind. Jedem Teilestapel 2 ist dabei eine Stapeleinheit 5 zur Aufnahme der Teile als eine Art Träger zugeordnet, die entlang einer Verstellachse 6 relativ zu der Ablageebene 4 verstellbar sind und zwar unabhängig voneinander, wobei den Stapeleinheiten 5 zu diesem Zweck gemeinsame, lediglich schematisch angedeutete Verstellmittel 7 zugeordnet sind, beispielsweise in Form eines Servomotors oder eines pneumatischen oder hydraulischen Kolbenzylinderantriebes.

Anhand der Fig. 1 bis 3 ist gut zu erkennen, dass jeder Stapeleinheit 5 ein eigenes, hier säulenförmiges Rasterelement 8 zugeordnet ist, wobei es denkbar ist, mehreren Stapeleinheiten ein gemeinsames Rasterelement zuzuordnen. In dem gezeigten Ausführungsbeispiel sind, was bevorzugt ist, sämtliche Rasterelemente 8 gemeinsam mittels der Verstellmittel 7 verstellbar. Zu diesem Zweck sind die Rasterelemente 8 an einem Grundträger 9 fixiert, welcher mittels der Verstellmittel 7 entlang der Verstellachse 6 hin- und herverstellbar ist und damit die Rasterelemente 8, die auf diese Weise andauernd eine regelmäßige Hin- und Herbewegung, hier eine bevorzugte Auf- und Abbewegung entlang der, bevorzugt vertikalen Verstellachse 6 ausführen. Ferner ist jeder Stapeleinheit 5 ein, hier ebenfalls säulenförmiges, starr positioniertes Halteelement 10 zugeordnet, relativ zu dem die Rasterelemente 8 hin- und herbewegbar sind. Die Halteelemente 10 werden von den Stapeleinheiten 5 umgriffen und die Stapeleinheiten 5 werden bei einer Bewegung entlang der Verstellachse an dem jeweiligen Halteelement 10 geführt.

Jeder Stapeleinheit 5 sind Rasterelementarretiermittel 11 zugeordnet, mit dem die jeweilige Stapeleinheit lösbar an dem zugehörigen Rasterelement 8 fixierbar ist, um auf diese Weise um ein Rastermaß, um welches die Rasterelemente mittels der Verstellmittel 7 hin- und herbewegt werden, um die Stapeleinheit um dieses Rastermaß von der Ablageebene 4 nach erfolgter Ablage eines Teils wegbewegen zu können. Ferner sind jeder Stapeleinheit 5 Halteelementarretiermittel 12 zugeordnet, die, wenn die Rasterelementarretiermittel 11 nicht mit dem zugehörigen Rasterelement gekoppelt sind, eine lösbare Arretierung der jeweiligen Stapeleinheit 5 an dem zugeordneten Halteelement 10 sicherzustellen, damit die Stapeleinheit ihre Position entlang der Verstellachse, die bevorzugt mit einer Stapelachse zusammenfällt, halten zu können. In dem gezeigten Ausführungsbeispiel sind die Rasterelementarretiermittel 11 und die Halteelementarretiermittel 12 jeweils als pneumatische Klemmpatronen ausgeführt, wobei selbstverständlich andere Ausführungen möglich sind. Die Rasterelementarretiermittel 11 und die Halteelementarretiermittel 12 sind gemeinsam mit der zugehörigen Stapeleinheit 5 entlang der Verstellachse verstellbar.

Bevorzugt sind die Rasterelementarretiermittel und die Halteelementarretiermittel gemeinsam mit der zugehörigen Stapeleinheit entlang der Verstellachse verstellbar.

Wenn ein Stapel gefüllt ist, kann dieser von der Stapeleinheit 5 entnommen werden und die Stapeleinheit 5 wird mit Hilfe von als Pneumatikzylinder ausgebildeten Rückstellmitteln 13 in die Ausgangsposition zurückverstellt werden. Zu diesem Zweck müssen die Rasterelementarretiermittel 11 und die Halteelementarretiermittel 12 gelöst sein.

Bei der gezeigten Stapelvorrichtung 1 erfolgt die Steuerung der Rasterelementarretiermittel 11 und der Halteelementarretiermittel 12 derart, dass die Rasterelementarretiermittel 11 für den Fall, dass auf der zugehörigen Stapeleinheit 5 Teile abgelegt wurden, diese mit dem zugehörigen Rasterelement 8 gekoppelt werden, insbesondere wenn sich dieses am oberen Umkehrpunkt seiner Hin- und Herbewegung befindet, um die Stapeleinheit 5 um ein vorgegebenes, insbesondere einstellbares Rastermaß entlang der Verstellachse nach unten von der Ablageebene 4 wegverstellen zu können. Gleichzeitig müssen die Halteelementarretiermittel 12 gelöst werden, damit die Stapeleinheit 5 entlang des zugehörigen Halteelements 10 abwärts bewegt werden kann. Für den Fall, dass kein Teil auf die Stapeleinheit bei einer gemeinsamen Ablage abgelegt wird, erfolgt die Kopplung der Rasterelementarretiermittel 11 mit dem zugehörigen Rasterelement für die kommende Abwärtsbewegung nicht, sondern die Halteelementarretiermittel 12 bleiben mit den zugehörigen Halteelement verbunden, bis bei einem nächsten gemeinsamen Ablagevorgang ein Teil auf die Stapeleinheit abgelegt wird.

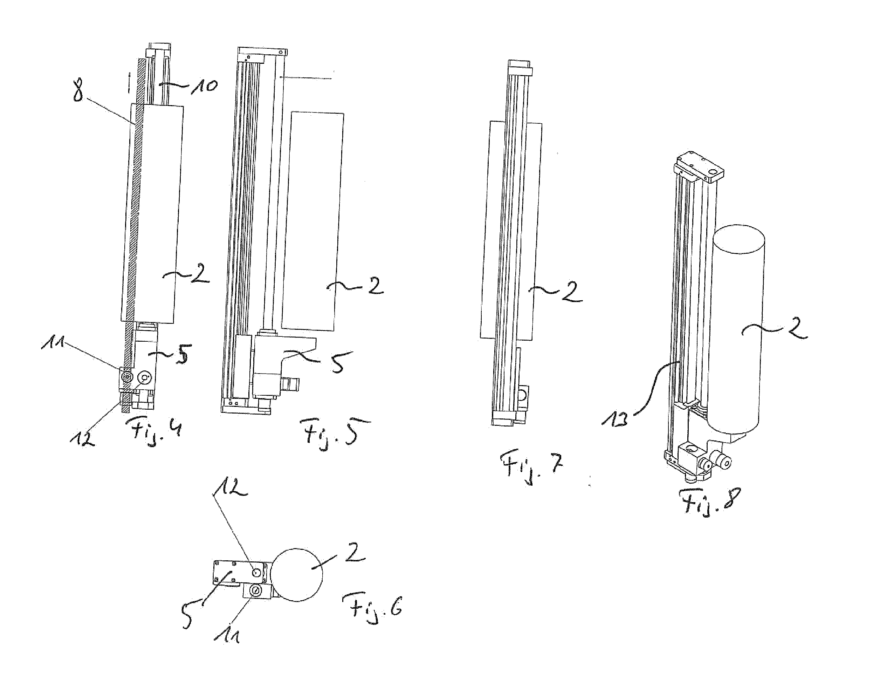

In den Fig. 4 bis 8 ist eine Stapeleinheit 5 mit zugehörigen Komponenten im Detail gezeigt. Zu erkennen ist vor allem das auf- und abbewegbare, hier säulenförmige Rasterelement 8, mit welchem die Stapeleinheit 5 über die hier als Klemmpatrone ausgebildeten Rasterelementarretiermitteln 11 koppelbar ist. Alternativ ist die Stapeleinheit 5 mit Hilfe von ebenfalls als Klemmpatrone ausgeführten Haltelementarretiermitteln 12 mit einem gleichzeitig eine Führung bildenden Halteelement 10 koppelbar. Die Verstellmittel, mit denen das Rasterelement 8 rhythmisch bzw. gleichförmig hin- und herbewegbar ist, sind aus Übersichtlichkeitsgründen nicht gezeigt. In dem gezeigten Ausführungsbeispiel erfolgt die Rückverstellung der Stapeleinheit 5 in Richtung Ablageebene mit Hilfe eines Kolbenzylinderantriebs.

### Bezugszeichenliste

- 1: Stapelvorrichtung
- 2: Teilestapel
- 3: Ablagemittel
- 4: Ablageebene
- 5: Stapeleinheit(en)
- 6: Verstellachse
- 7: Verstellmittel
- 8: Rasterelement(e)
- 9: Grundträger
- 10: Haltemittel
- 11: Rasterelementarretiermittel
- 12: Halteelementarretiermittel
- 13: Rückstellmittel

## Patentansprüche

1. Stapelvorrichtung zum gleichzeitigen Erzeugen mehrerer Teilestapel (2), umfassend mindestens zwei entlang einer Verstellachse (6) verstellbare Stapeleinheiten (5), auf die in einer gemeinsamen Ablageebene (4) zur Bildung jeweils eines Teilestapels (2) Teile ablegbar sind,
**dadurch gekennzeichnet,**
**dass** den Stapeleinheiten (5) mindestens ein sich entlang der Verstellachse (6) erstreckendes Rasterelement (8) und mindestens ein sich entlang der Verstellachse (6) erstreckendes Halteelement (10) zugeordnet ist, und dass das mindestens eine Rasterelement (8) mit von gemeinsamen Verstellmitteln (7) für die Stapeleinheiten (5) um ein Rastermaß entlang der Verstellachse (6) relativ zu dem mindestens einen Halteelement (10) hin- und herbewegbar ist, und dass jeder Stapeleinheit (5) Rasterelementarretiermittel (11) zur lösbaren Arretierung der jeweiliges Stapeleinheit (5) an dem mindestens einen Rasterelement (8) zum gemeinsamen Verstellen des mindestens einen Rasterelementes (8) mit dieser Stapeleinheit (5) zugeordnet sind, und dass jeder Stapeleinheit (5) Halteelementarretiermittel (12) zugeordnet sind, mit denen die Stapeleinheit (5) lösbar an dem mindestens einen Halteelement (10) zur stationären Positionierung der Stapeleinheit (5) relativ zu dem mindestens einen hin- und herverstellbaren Rasterelement (8) zugeordnet sind.

2. Stapelvorrichtung nach Anspruch 1,
**dadurch gekennzeichnet,**
**dass** jeder Stapeleinheit (5) oder jeder Gruppe von Stapeleinheiten (5) ein sich entlang der Verstellachse (6) erstreckendes Rasterelement und/oder ein sich entlang der Verstellachse (6) erstreckendes Halteelement (10) zugeordnet ist, und dass die Rasterelemente (8) gemeinsam mit Hilfe der gemeinsamen Verstellmittel (7) um das Rastermaß entlang der Verstellachse (6) relativ zu den Halteelementen (10) hin- und herbewegbar sind.

3. Stapelvorrichtung nach einem der Ansprüche 1 oder 2,
**dadurch gekennzeichnet,**
**dass** Mittel zum insbesondere stufenlosen Einstellen des Rastermaßes vorgesehen sind.

4. Stapelvorrichtung nach einem der vorhergehenden Ansprüche,
**dadurch gekennzeichnet,**
**dass** die Rasterelementarretiermittel (11) und/oder die Halteelementarretiermittel (12) Klemmmittel, insbesondere in Form einer Klemmpatrone, umfassen.

5. Stapelvorrichtung nach einem der vorhergehenden Ansprüche,
**dadurch gekennzeichnet,**
**dass** die Rasterelementarretiermittel (11) und/oder die Halteelementarretiermittel (12), insbesondere ausschließlich, reibschlüssig und/oder formschlüssig, bevorzugt verrastend, mit dem mindestens einen Rasterelement (8) bzw. Halteelement (10) zusammenwirkend ausgebildet sind.

6. Stapelvorrichtung nach einem der vorhergehenden Ansprüche,
**dadurch gekennzeichnet,**
**dass** die gemeinsamen Verstellmittel (7) der Stapeleinheiten (5) zum Hin- und Herverstellen des mindestens einen Rasterelementes (8), insbesondere der mehreren Rasterelemente (8), einen gemeinsamen pneumatischen, hydraulischen oder elektrischen, bevorzugt servomotorischen, Antrieb umfassen.

7. Stapelvorrichtung nach einem der vorhergehenden Ansprüche,
**dadurch gekennzeichnet,**
**dass** den Stapeleinheiten (5) Rückstellmittel (13), bevorzugt zum individuellen, Zurückstellen in eine, bevorzugt obere, Ausgangsposition entlang der Verstellachse (6), insbesondere in Form eines pneumatischen oder hydraulischen Antriebs, zugeordnet sind.

8. Stapelvorrichtung nach einem der vorhergehenden Ansprüche,
**dadurch gekennzeichnet,**
**dass** das mindestens eine Halteelement, vorzugsweise die mehreren Haltelemente jeweils, als Führung für die zugeordnete Stapeleinheit (5) zum Führen der Stapeleinheit (5) bei der Verstellbewegung entlang der Verstellachse (6) ausgebildet ist/sind.

9. Stapelvorrichtung nach einem der vorhergehenden Ansprüche,
**dadurch gekennzeichnet,**
**dass** den Rasterelementarretiermitteln (11) und den Halteelementarretiermitteln (12) Steuermittel zugeordnet sind, die vorzugsweise eine gleichzeitige Arretierung Rasterelementarretiermitteln (11) und den Halteelementarretiermitteln (12) einer Stapeleinheit (5) an dem der Stapeleinheit (5) zugeordneten Rasterelement (8) und dem Halteelement (10) bei hin- und herbewegtem Rasterelement (8) blockierend ausgebildet sind.

10. Stapelvorrichtung nach einem der vorhergehenden Ansprüche,
**dadurch gekennzeichnet,**
**dass** die Stapelvorrichtung (1) Ablagemittel (3), insbesondere umfassend mehreren Aufnahmeplätze zur Aufnahme einer der Anzahl der Stapeleinheiten (5) entsprechenden Anzahl an Teilen und zur Ablage dieser Teile in der gemeinsamen Ablageebene (4) auf den Stapeleinheiten (5) aufweist.

11. Stapelvorrichtung nach Anspruch 10,
**dadurch gekennzeichnet,**
**dass** Detektionsmittel zum Erkennen eines Fehlteils vorgesehen sind, die signalleitend mit den Steuermitteln zum Ansteuern der Rasterelementarretiermittel (11) und der Halteelementarretiermittel (12) verbunden sind.

12. Stapelverfahren zum gleichzeitigen Erzeugen mehrerer Teilestapel (2), vorzugsweise Spritzgussteilestapel oder Tiefziehteilestapel, unter Verwendung einer Stapelvorrichtung (1) nach einem der vorhergehenden Ansprüche, wobei gleichzeitig mehrere Teile auf unterschiedliche Teilestapel (2) in einer gemeinsamen Ablageebene (4) abgelegt werden, wobei zur Bereitstellung der gemeinsamen Ablageebene (4) nur diejenigen Teilestapel (2), auf die bei einem Ablagevorgang ein Teil abgelegt wurde, entlang der Verstellachse (6) um ein Rastermaß verstellt werden, und wobei diejenigen Teilestapel (2), auf die bei diesem Ablagevorgang kein Teil abgelegt wurde, bis zum Ablegen des nächsten Teils in ihrer individuellen Position auf der Verstellachse (6) verbleiben,
wobei nur diejenigen Teilestapel (2), auf die bei einem Ablagevorgang ein Teil abgelegt wurde, mit gemeinsamen Verstellmitteln (7) wirkverbunden und mit diesen entlang der Verstellachse (6) um das Rastermaß verstellt werden und dass diejenigen Teilestapel (2), auf die bei einem Ablagevorgang kein Teil abgelegt wurde, nicht mit den gemeinsamen Verstellmitteln (7) verbunden werden und bis zum Ablagen des nächsten Teils in der Position auf der Verstellachse (6) verbleiben.

13. Stapelverfahren nach Anspruch 12,
**dadurch gekennzeichnet,**
**dass** die Verstellmittel (7) eine andauernde Hin- und Herbewegung von mindestens einem den Teilestapeln (2) zugeordneten Rasterelementen (8) entlang der Verstellachse (6) verursachend ausgebildet sind, und dass die Teilestapel (2) mit diesem mindestens einen Rastelelement wirkverbindbar sind.

14. System, umfassend eine Teileproduktionsvorrichtung, insbesondere Spritzgieß- oder Tiefzieheinrichtung, zum gleichzeitigen Produzieren mehrerer Teile und eine Stapelvorrichtung (1) nach einem der Ansprüche 1 bis 10 zum Stapeln dieser Teile.

## Claims

1. A stacking device for simultaneously producing several parts stacks (2), comprising at least two stacking units (5) that can be adjusted along an adjustment axis (6) and onto which parts can be deposited in a common depositing plane (4) in order to respectively form a parts stack (2),
**characterized in**
**that** at least one grid element (8) extending along the adjustment axis (6), as well as at least one holding element (10) extending along with the adjustment axis (6), is assigned to the stacking units (5), in that the at least one grid element (8) can be moved reciprocatingly along the adjustment axis (6) by one grid dimension relative to the at least one holding element (10) by common adjusting means (7) for the stacking units (5), in that grid element locking means (11) for separably locking the respective stacking unit (5) on the at least one grid element (8) are assigned to each stacking unit (5) in order to jointly adjust the at least one grid element (8) with this stacking unit (5), and in that holding element locking means (12), by means of which the stacking unit (5) can be separably locked on the at least one holding element (10), are assigned to each stacking unit (5) in order to stationarily position the stacking unit (5) relative to the at least one reciprocatingly adjustable grid element (8).

2. The stacking device according to claim 1,
**characterized in**
**that** a grid element extending along the adjustment axis (6) and/or a holding element (10) extending along the adjustment axis (6) is assigned to each stacking unit (5) or each group of stacking units (5), and in that the grid elements (8) can be jointly moved reciprocatingly along the adjustment axis (6) by the grid dimension relative to the holding elements (10) with the aid of the common adjusting means (7).

3. The stacking device according to one of claims 1 or 2,
**characterized in**
**that** means are provided for adjusting the grid dimension, in particular continuously.

4. The stacking device according to one of the preceding claims,
**characterized in**
**that** the grid element locking means (11) and/or the holding element locking means (12) comprise clamping means, particularly in the form of a clamping cartridge.

5. The stacking device according to one of the preceding claims,
**characterized in**
**that** the grid element locking means (11) and/or the holding element locking means (12) are realized such that they cooperate with the at least one grid element (8) or holding element (10), in particular exclusively, in a frictionally engaged or positively fitted fashion, preferably an interlocking fashion.

6. The stacking device according to one of the preceding claims,
**characterized in**
**that** the common adjusting means (7) of the stacking units (5) comprise a common pneumatic, hydraulic or electric drive, preferably a servomotor, for reciprocatingly adjusting the at least one grid element (8), particularly multiple grid elements (8).

7. The stacking device according to one of the preceding claims,
**characterized in**
**that** resetting means (13), preferably in the form of a pneumatic or hydraulic drive, are assigned to the stacking units (5), particularly for individually resetting the stacking units into a preferably upper starting position along the adjustment axis (6).

8. The stacking device according to one of the preceding claims,
**characterized in**
**that** the at least one holding element, preferably the multiple holding elements, is/are respectively realized in the form of a guide for the assigned stacking unit (5) in order to guide the stacking unit (5) during the adjusting motion along the adjustment axis (6).

9. The stacking device according to one of the preceding claims,
**characterized in**
**that** control means are assigned to the grid element locking means (11) and the holding element locking means (12) and preferably realized such that they block the grid element locking means (11) and the holding element locking means (12) of a stacking unit (5) from simultaneously locking on the grid element (8) and the holding element (10) assigned to the stacking unit (5) while the grid element (8) reciprocates.

10. The stacking device according to one of the preceding claims,
**characterized in**
**that** the stacking device (1) features depositing means (3) comprising, in particular, multiple receptacle spaces for receiving a number of parts that corresponds to the number of stacking units (5) and for depositing these parts onto the stacking units (5) in the common depositing plane (4).

11. The stacking device according to claim 10,
**characterized in**
**that** detection means for detecting a missing part are provided and connected to the control means for activating the grid element locking means (11) and the holding element locking means (12) in a signaling fashion.

12. A stacking method for simultaneously producing several parts stacks (2), preferably stacks of injection-moulded parts or stacks of deep-drawn parts, by utilizing a stacking device (1) according to one of the preceding claims, wherein several parts are simultaneously deposited onto different parts stacks (2) in a common depositing plane (4), wherein only the parts stacks (2), onto which a part was deposited during a depositing process, are adjusted along the adjustment axis (6) by one grid dimension in order to realize the common depositing plane (4), wherein the parts stacks (2), onto which no part was deposited during this depositing process, remain in their individual position on the adjustment axis (6) until the next part is deposited thereon, wherein only the parts stacks (2), onto which a part was deposited during a depositing process, are functionally connected to common adjusting means (7) and adjusted along the adjustment axis (6) by the grid dimension with the aid of these adjusting means, and wherein the parts stacks (2), onto which no part was deposited during this depositing process, are not connected to the common adjusting means (7) and remain in their position on the adjustment axis (6) until the next part is deposited thereon.

13. The stacking method according to claim 12,
**characterized in**
**that** the adjusting means (7) are realized such that they cause a continuous reciprocating motion of at least one grid element (8) assigned to the parts stacks (2) along the adjustment axis (6), and in that the parts stacks (2) can be functionally connected to this at least one grid element.

14. A system comprising a parts production device, particularly an injection-moulding or deep-drawing device, for simultaneously producing several parts and a stacking device (1) according to one of claims 1-10 for stacking these parts.

## Revendications

1. Dispositif d'empilement pour la réalisation simultanée de plusieurs piles de pièces (2), comprenant au moins deux unités d'empilement (5) déplaçables le long d'un axe de déplacement, sur lesquelles des pièces peuvent être déposées dans un plan de dépôt commun (4) pour la formation à chaque fois d'une pile de pièces (2), **caractérisé en ce que** au moins un élément de cadre (8) s'étendant le long de l'axe de déplacement (6) et au moins un élément de maintien (10) s'étendant le long de l'axe de déplacement (6) sont associés aux unités d'empilement (5), et **en ce que** ledit au moins un élément de cadre (8) est déplaçable en va-et-vient par rapport audit au moins un élément de maintien (10) d'une dimension de cadre le long de l'axe de déplacement (6) avec des moyens de déplacement communs (7) pour les unités d'empilement (5), et **en ce qu'**à chaque unité d'empilement (5) sont associés des moyens d'arrêt de l'élément de cadre (11) pour le blocage amovible de l'unité d'empilement respective (5) sur ledit au moins un élément de cadre (8) pour le déplacement commun dudit au moins un élément de cadre (8) avec cette unité d'empilement (5), et **en ce qu'**à chaque unité d'empilement (5) sont associés des moyens d'arrêt de l'élément de maintien (12), avec lesquels l'unité d'empilement (5) est associée de façon séparable audit au moins un élément de maintien (10) pour le positionnement stationnaire de l'unité d'empilement (5) par rapport audit au moins un élément de cadre (8) déplaçable en va-et-vient.

2. Dispositif d'empilement selon la revendication 1, **caractérisé en ce qu'**un élément de cadre s'étendant le long de l'axe de déplacement (6) et/ou un élément de maintien (10) s'étendant le long de l'axe de déplacement (6) est associé à chaque unité d'empilement (5) ou à chaque groupe d'unités d'empilement (5), et **en ce que** les éléments de cadre (8) sont déplaçables en va-et-vient en commun de la dimension de cadre le long de l'axe de déplacement (6) par rapport aux éléments de maintien (10) à l'aide des moyens de déplacement communs (7).

3. Dispositif d'empilement selon l'une des revendications 1 ou 2, **caractérisé en ce qu'**il est prévu des moyens pour le réglage en particulier continu de la dimension de cadre.

4. Dispositif d'empilement selon l'une quelconque des revendications précédentes, **caractérisé en ce que** les moyens de blocage d'élément de cadre (11) et/ou les moyens de blocage d'éléments de maintien (12) comprennent des moyens de serrage, en particulier sous la forme d'une cartouche de serrage.

5. Dispositif d'empilement selon l'une quelconque des revendications précédentes, **caractérisé en ce que** les moyens de blocage d'élément de cadre (11) et/ou les moyens de blocage d'élément de maintien (12) sont réalisés en coopération avec ledit au moins un élément de cadre (8) ou ledit au moins un élément de maintien (10), en particulier exclusivement par friction et/ou par emboîtement, de préférence par encliquetage.

6. Dispositif d'empilement selon l'une quelconque des revendications précédentes, **caractérisé en ce que** les moyens de déplacement communs (7) des unités d'empilement (5) comprennent pour le déplacement réciproque dudit au moins un élément de cadre (8), en particulier des multiples éléments de cadre (8), un entraînement commun pneumatique, hydraulique ou électrique, de préférence par servomoteur.

7. Dispositif d'empilement selon l'une quelconque des revendications précédentes, **caractérisé en ce que** des moyens de rappel (13) pour le rappel de préférence individuel dans une position initiale, de préférence supérieure, le long de l'axe de déplacement (6), sont associés aux unités d'empilement (5), de préférence sous la forme d'un entraînement pneumatique ou hydraulique.

8. Dispositif d'empilement selon l'une quelconque des revendications précédentes, **caractérisé en ce que** ledit au moins un élément de maintien, de préférence les multiples éléments de maintien, est/sont réalisé(s) respectivement sous forme de guidage pour l'unité d'empilement associée (5), pour guider l'unité d'empilement (5) lors du mouvement de déplacement le long de l'axe de déplacement (6).

9. Dispositif d'empilement selon l'une quelconque des revendications précédentes, **caractérisé en ce que** des moyens de commande sont associés aux moyens de blocage d'élément de cadre (11) et aux moyens de blocage d'élément de maintien (12), qui sont configurés de façon à bloquer un blocage simultané de moyens de blocage d'élément de cadre (11) et des moyens de blocage d'élément de maintien (12) d'une unité d'empilement (5) sur l'élément de cadre (8) associé à l'unité d'empilement (5) et l'élément de maintien (10) avec l'élément de cadre (8) en mouvement réciproque.

10. Dispositif d'empilement selon l'une quelconque des revendications précédentes, **caractérisé en ce que** le dispositif d'empilement (1) présente des moyens de dépôt (3), en particulier comprenant plusieurs emplacements de dépôt pour recevoir un nombre de pièces correspondant au nombre des unités d'empilement (5) et pour le dépôt de ces pièces dans le plan de dépôt commun (4) sur les unités d'empilement (5).

11. Dispositif d'empilement selon la revendication 10, **caractérisé en ce qu'**il est prévu des moyens de détection pour reconnaître une pièce défectueuse, qui sont reliés par liaison de signalisation aux moyens de commande en vue de commander les moyens de blocage d'élément de cadre (11) et les moyens de blocage d'élément de maintien (12).

12. Procédé d'empilement pour la réalisation simultanée de plusieurs piles de pièces (2), de préférence de piles de pièces moulées par injection ou de piles de pièces embouties avec utilisation d'un dispositif d'empilement (1) selon l'une quelconque des revendications précédentes, dans lequel on dépose simultanément plusieurs pièces sur différentes piles de pièces (2) dans un plan de dépôt commun (4), dans lequel, pour la préparation du plan de dépôt commun (4), on déplace d'une dimension de cadre le long de l'axe de déplacement (6) uniquement les piles de pièces (2) sur lesquelles une pièce a été déposée lors d'une opération de dépôt, et dans lequel les piles de pièces (2), sur lesquelles aucune pièce n'a été déposée lors de cette opération de dépôt, restent dans leur position individuelle sur l'axe de déplacement (6) jusqu'au dépôt de la prochaine pièce, dans lequel seules les piles de pièces (2), sur lesquelles une pièce a été déposée lors d'une opération de dépôt, sont mises en liaison active avec des moyens de déplacement communs (7) et sont déplacées avec ceux-ci de la dimension de cadre le long de l'axe de déplacement (6) et en ce que les piles de pièces (2), sur lesquelles aucune pièce n'a été déposée lors d'une opération de dépôt, ne sont pas mises en liaison avec les moyens de déplacement communs (7) et restent dans la position sur l'axe de déplacement (6) jusqu'au dépôt de la prochaine pièce.

13. Procédé selon la revendication 12, **caractérisé en ce que** les moyens de déplacement (7) sont réalisés de façon à provoquer un mouvement réciproque permanent d'au moins un élément de cadre (8) associé à une des piles de pièces (2) le long de l'axe de déplacement (6), et **en ce que** les piles de pièces (2) peuvent être mises en liaison active avec ledit au moins un élément de cadre.

14. Système, comprenant un dispositif de production de pièces, en particulier un dispositif de moulage par injection ou un dispositif d'emboutissage, pour la production simultanée de plusieurs pièces et un dispositif d'empilement (1) selon l'une quelconque des revendications 1 à 10 pour l'empilement de ces pièces.
